(19) Europäisches Patentamt
European Patent Office
Office européen des brevets

(11) Veröffentlichungsnummer: **0 061 623**
**A1**

# (12) EUROPÄISCHE PATENTANMELDUNG

(21) Anmeldenummer: **82102005.4**

(22) Anmeldetag: **12.03.82**

(51) Int. Cl.³: **D 21 H 3/80**
C 09 B 47/32, C 09 B 47/24
C 09 B 47/16

(30) Priorität: **21.03.81 DE 3111199**

(43) Veröffentlichungstag der Anmeldung:
**06.10.82 Patentblatt 82/40**

(84) Benannte Vertragsstaaten:
**CH DE FR GB IT LI**

(71) Anmelder: **BASF Aktiengesellschaft**
**Carl-Bosch-Strasse 38**
**D-6700 Ludwigshafen(DE)**

(72) Erfinder: **Patsch, Manfred, Dr.**
**Fritz-Wendel-Strasse 4**
**D-6706 Wachenheim(DE)**

(72) Erfinder: **Ruske, Manfred**
**Merziger Strasse 10**
**D-6700 Ludwigshafen(DE)**

(72) Erfinder: **Hahn, Erwin, Dr.**
**Am Buechsenackerhang 31**
**D-6900 Heidelberg(DE)**

## (54) Verfahren zum Färben oder Bedrucken von Papier und neue kationische Phthalocyaninfarbstoffe.

(57) Verfahren zum Färben oder Bedrucken von Papier, bei dem kationische Farbstoffe der Formel

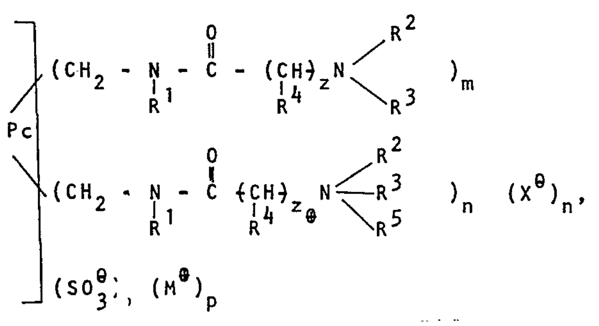

verwendet werden. In der Formel stehen Pc für einen (n + m + p)-wertigen Phthalocyaninrest, $R^1$ für H oder $C_1$-bis $C_4$-Alkyl, $R^2$ und $R^3$ für Alkyl, Hydroxyalkyl, Cycloalkyl, Benzyl, Phenyl, Dialkylaminoalkyl, Cycloalkylalkylaminoalkyl, Cycloalkylaminoalkyl oder

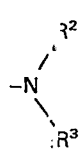

für einen Pyrrolidin–, Imidazol, 2-Ethyl-4-methylimidazol–, Morpholin oder Piperazinrest, $R^4$ für H oder Methyl, $R^5$ für Alkyl, Hydroxyalkyl oder Benzyl, $X^{\ominus}$ für ein Anion, $M^{\oplus}$ für ein Kation, z für 1 oder 2, p für 0 oder 1, m für 0, 1, 2, 3, oder 4 und n für 0, 1, 2, 3 oder 4, wobei $1 \leq (m + n + p) \leq 4$ ist.

Neue kationische Farbstoffe der Formel I, in der m für 0 oder 1 und n für 1, 2, 3 oder 4 und $R^1$ H oder Alkyl, $R^3$ und $R^2$ Alkyl, Hydroxyalkyl, Cycloalkyl, Benzyl, Phenyl, Tolyl oder

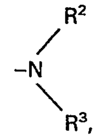

$R^4$, $R^5$, $X^{\ominus}$, $M^{\oplus}$, z und p die oben angegebene Bedeutung haben.

Man erhält echte Färbungen oder Drucke auf Papier.

EP 0 061 623 A1

# Verfahren zum Färben oder Bedrucken von Papier und neue kationische Phthalocyaninfarbstoffe

Die Erfindung betrifft ein Verfahren zum Färben oder Bedrucken von Papier, sowie neue kationische Phthalocyaninfarbstoffe.

Aufgabe der vorliegenden Erfindung war es, Papier ausblutecht zu färben oder zu bedrucken.

Es wurde gefunden, daß man ausblutechte Färbungen oder Drucke auf Papier erhält, wenn man hierzu die erfindungsgemäß anzuwendenden Farbstoffe verwendet. Demgemäß betrifft die vorliegende Erfindung ein Verfahren zum Färben oder Bedrucken von Papier mit kationischen Farbstoffen, das dadurch gekennzeichnet ist, daß man kationische Farbstoffe der Formel

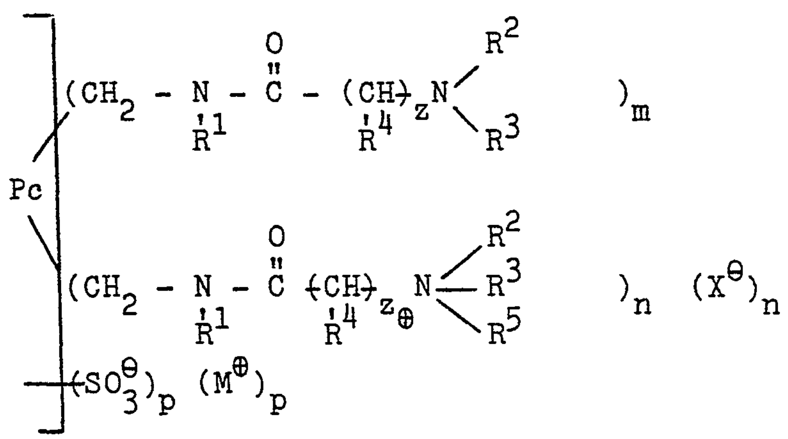

(I)

verwendet, in der

Pc einen (n + m + p)-wertigen Rest eines Phthalocyanins,

$R^1$ Wasserstoff oder $C_1$- bis $C_4$-Alkyl,

$R^2$ und $R^3$ unabhängig voneinander $C_1$- bis $C_{14}$-Alkyl, $C_2$- bis $C_4$-Hydroxyalkyl, $C_5$- bis $C_8$-Cycloalkyl, 2-Aminocyclopentyl-methyl, Benzyl, Phenyl, Tolyl, N,N-Di-

-$C_1$- bis $C_5$-alkylamino- $C_2$- bis $C_4$-alkyl, N-$C_5$- bis $C_8$-Cyclo-alkylamino-$C_2$- bis $C_4$-alkyl, N-$C_1$- oder $C_2$-Alkyl-N-$C_5$- bis $C_8$-cycloalkyl-amino-$C_2$- bis $C_4$-alkyl, wobei - wenn n = 0 ist - $R^2$ auch Wasserstoff sein kann, oder $-N{<}^{R^2}_{R^3}$ einen Pyrrolidin-, Imidazol, 2-Ethyl-4-methylimidazol-, Morpholin-, Piperazin-, N'-$C_1$- bis $C_4$-Alkylpiperazinrest oder

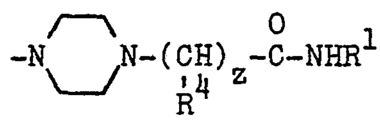,

$R^4$ Wasserstoff oder Methyl,

$R^5$ $C_1$- bis $C_{12}$-Alkyl, $C_2$- bis $C_4$-Hydroxyalkyl, das gegebenenfalls durch Chlor substituiert ist, oder Benzyl,

$X^{\ominus}$ ein Äquivalent eines Anions oder $HO^{\ominus}$

$M^{\oplus}$ ein Äquivalent eines Kations,

z 1 oder 2,

p 0 oder 1,

m 0, 1, 2, 3 oder 4 und

n 0, 1, 2, 3 oder 4 bedeuten, wobei $1 \leqslant (m + n) \leqslant 4$ ist.

Die Farbstoffe (I) mit n = 0 sind in verdünnten Säuren und die Farbstoffe (I) mit quaternären Gruppen in Wasser gut bis leicht löslich. Trotz der hohen Löslichkeit sind die Farbstoffe auf Papier sehr stark substantiv. Die hohe Substantivität bewirkt, daß das mit den Farbstoffen der Formel I gefärbte oder bedruckte Papier ausgezeichnete Ausblutechtheiten aufweist. D.h. das mit den Farbstoffen (I) gefärbte Papier blutet weißes Begleitmaterial in Gegenwart von verdünnten Säuren, wie Milch- oder Essigsäure, verdünnten wäßrigen Alkalien oder Seifenlösungen, verdünnten Alkoholen, Öl oder Milch nicht an (Test nach DIN 53 991).

So weist z.B. der Farbstoff der Formel I mit $R^1=R^4=H$, $z = 1$, $n = 0$, $\bar{m} = 1,4$ und

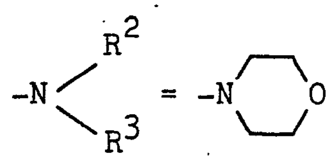

im Vergleich zu der aus der DE-PS 10 29 965, Beispiel la bekannten Pyridiniumverbindung, die als nächstliegender Stand der Technik anzusehen ist, eine höhere Ausblutechtheit nach DIN 53 991 auf.

Farbstoffe I mit m = 0 und p = 0 und $R^5$ = 2-Hydroxyethyl oder Benzyl sind hervorragend für wäßrige Flexodruckfarben geeignet. Die mit diesen Farbstoffen erhaltenen Drucke weisen hervorragende Echtheiten wie Wasser-, Öl-, Alkali- und Säureechtheit auf.

So hat z.B. der Farbstoff I mit $R^1 = R^4 = H$, $Z = 1$, $m = 0$, $\bar{n} = 1,3$, $R^5$ = 2-Hydroxyethyl, $X^\ominus = OH^\ominus$ und

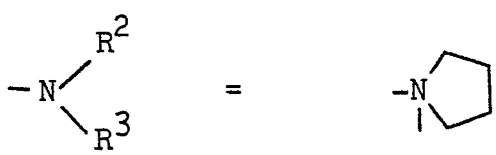

im Vergleich zu der aus der DE-PS 10 29 965, Beispiel la bekannten Pyridiniumverbindung eine höhere Ausblutechtheit nach DIN 53 991 und eine höhere Lichtechtheit.

Aufgrund der hohen Substantivität der Farbstoffe (I) erhält man bei der Massefärbung von Papier ein farbloses Abwasser.

Die gute Löslichkeit der Farbstoffe (I) ermöglicht Flüssigeinstellungen, die in der Papierindustrie in steigendem

Maße bevorzugt werden, da solche Einstellungen ein staubfreies Arbeiten und eine einfache reproduzierbare Dosierung der Farbstoffe für die Färbung erlauben.

Die Farbstoffe (I) haben außerdem den Vorteil, daß das mit diesen Farbstoffen gefärbte Papier bleichbar ist. Diese Eigenschaft war bei den hochsubstantiven Farbstoffen gemäß der Erfindung mit einem sehr hohen sonstigen Echtheitsniveau bei den Naßechtheiten nicht vorherzusehen. Die Bleichbarkeit des mit (I) gefärbten Papiers bringt bei der Wiederverwendung von Abfallpapier und Altpapier große Vorteile, da bei der Aufarbeitung eine praktisch ungefärbte Papiermasse erhalten werden kann.

Als Substituenten kommen für $R^1$ neben Wasserstoff $C_1$- bis $C_4$-Alkyl, z.B. Methyl, Ethyl, Propyl und Butyl in Betracht. Vorzugsweise steht $R^1$ für Wasserstoff.

Für $R^2$ und $R^3$ sind außer den genannten im einzelnen z.B. zu nennen: $C_1$- bis $C_{14}$-Alkyl, $C_2$- bis $C_4$-Hydroxyalkyl und $C_5$- bis $C_8$-Cycloalkyl: Methyl, Ethyl, n-Propyl, i-Propyl, n-Butyl, i-Butyl, n-Amyl, i-Amyl, n-Hexyl, i-Hexyl, Heptyl, Octyl, 2-Ethylhexyl, Decyl, Dodecyl, Tridecyl, Tetradecyl, 2-Hydroxyethyl, 2- und 3-Hydroxypropyl, Cyclopentyl, cyclohexyl, Cyclooctyl; wenn n = 0 ist kommen für $R^2$ und $R^3$ auch N,N-Di-$C_1$- bis $C_5$-alkylamino-$C_2$- bis $C_4$-alkyl: N,N-Dimethylaminoethyl, N,N-Diethylaminoethyl, N,N-Dipropylaminoethyl, N,N-Dibutylaminoethyl, 3-(N,N-Dimethylamino)-propyl, 3-(N,N-Diethylamino)-propyl, 3-(N,N--Dipropylamino)-propyl und 3-(N,N-Dibutylamino)-propyl; N-$C_5$- bis $C_8$-Cycloalkylamino-$C_2$- bis $C_4$-alkyl und N-$C_1$- oder $C_2$-Alkyl-N-$C_5$- bis $C_8$-cycloalkylamino-$C_2$- oder $C_3$-alkyl: N-Cyclohexylaminoethyl, 3-(N-Cyclohexylamino)--propyl, 3-(N-Cyclooctylamino)-propyl, N-Methyl-N-Cyclohexylaminoethyl, N-Methyl-N-Cyclooctylaminoethyl,

3-(N-Methyl-N-Cyclohexylamino)-propyl und 3-(N-Methyl-N--cyclooctylamino)-propyl in Betracht.

$R^2$ und $R^3$ können gleich oder verschieden sein. Wenn n = 0 ist, kann $R^2$ auch für Wasserstoff stehen.

Außerdem kann die Gruppe $-N<_{R^3}^{R^2}$ für Reste stehen, die sich vom Pyrrolidin, Imidazol, 2-Ethyl-4-methylimidazol, Piperidin, Morpholin, Piperazin, N-$C_1$- bis $C_4$-Alkylpiperazin, z.B. N-Methyl- oder N-Ethylpiperazin oder von einen Piperazinrest der Formel

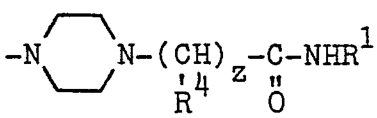

ableiten.

Vorzugsweise stehen $R^2$ und $R^3$ für $C_1$- bis $C_5$-Alkyl oder $-N<_{R^3}^{R^2}$ für Morpholinyl, Piperidinyl oder Pyrrolidinyl. Für $-N<_{R^3}^{R^2}$ ist Di-n-propylamino, Di-n-butylamino, Morpholinyl und Pyrrolidinyl besonders bevorzugt.

$R^4$ steht für Methyl und vorzugsweise für Wasserstoff.

Für $R^5$ kommen im einzelnen z.B. in Betracht: $C_1$- bis $C_{12}$-Alkyl und $C_2$- bis $C_4$-Hydroxyalkyl: Methyl, Ethyl, n- und i-Propyl, n- und i-Butyl, n- und i-Amyl, n- und i-Hexyl, Octyl, 2-Ethylhexyl, Decyl, Dodecyl, 2-Hydroxyethyl, 2- und 3-Hydroxypropyl, 2-Hydroxy-3-chlorpropyl, Hydroxybutyl und Benzyl.

Vorzugsweise steht $R^5$ für $C_1$- bis $C_4$-Alkyl, 2-Hydroxyethyl, 2-Hydroxy-3-chlorpropyl oder Benzyl, von denen 2-Hydroxyethyl, 2-Hydroxy-3-chlorpropyl und Benzyl bevorzugt sind. Besonders bevorzugt sind für $R^5$ 2-Hydroxyethyl und Benzyl.

Als Anionen sind für $X^\ominus$ z.B. zu nennen: $OH^\ominus$, Benzolsulfat, o- oder p-Toluolsulfonat, $Cl^\ominus$, 1/2 $SO_4^{2\ominus}$, $CH_3OSO_3^\ominus$, $CH_3COO^\ominus$; $CH_3O-CH_2COO^\ominus$, Lactat, $H_5C_2OSO_3^\ominus$ und 1/2 $ZnCl_4^{2\ominus}$, von denen $OH^\ominus$, $CH_3COO^\ominus$; $CH_3-OCH_2-COO^\ominus$ und Lactat bevorzugt sind.

Im Falle (m + n) > 1 können die Farbstoffe in Form von Mischungen aus Farbstoffen mit m und n je 1, 2, 3 oder 4 vorliegen, wobei m und n auch gebrochene Zahlen sein können.

Vorzugsweise ist (m + n) 1 bis 4, wobei m oder n auch 0 (null) sein kann.

Besonders bevorzugt sind Farbstoffe mit m = 1 bis 3 oder n = 1 bis 3, wobei n bzw. m = 0 ist.

p steht für 0 oder 1. Bevorzugt sind Gemische aus Farbstoffen I mit p = 0 und 1, so daß p im Mittel zwischen 0 und 0,5 liegt. Besonders bevorzugt sind Farbstoffe I mit p = 0.

Für $M^\oplus$ kommen als Kationen z.B. Alkalimetall- und Erdalkalimetallionen wie $Na^\oplus$, $K^\oplus$, $Li^\oplus$, 1/2 $Ca^{2\oplus}$; 1/2 $Mg^{2\oplus}$ und Ammonium in Betracht.

Für Pc sind als (m + n + p)-wertige Phthalocyaninreste solche zu nennen, die sich vom Kupfer-, Cobalt-, Nickel-, Zink-, Aluminium- oder Eisenphthalocyaninen und vom metallfreien Phthalocyanin ableiten. Die Phthalocyanine können bis zu 2 Chloratome im Molekül enthalten.

Von den Farbstoffen der Formel I sind solche bevorzugt, in denen sich Pc vom Kupferphthalocyanin ableitet. Besonders bevorzugt sind die in den Beispielen 1, 3, 12, 13 und 20 bis 22 beschriebenen Farbstoffe.

Die Verbindungen der Formel I mit n = 0 werden vorteilhafterweise durch Umsetzen der Farbstoffe Pc $(H)_{(m+n+p)}$ (II)

a) mit Aminoacetamiden oder Aminopropionylamiden der Formel

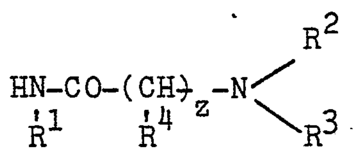

(III)

und wasserfreiem Formaldehyd oder

b) mit den entsprechenden N-Methylylolamiden

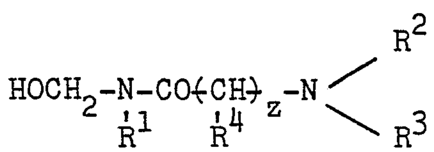

(IIIa)

in Gegenwart von sauren Mitteln erhalten. In den Formeln III und IIIa haben $R^1$, $R^2$, $R^3$, $R^4$ und z die oben angegebenen Bedeutungen.

Die Verbindungen III oder IIIa werden in mindestens der stöchiometrisch erforderlichen Menge, vorteilhafterweise im Überschuß, im Falle von (III) zusammen mit wasserfreiem Formaldehyd angewendet.
Der Formaldehyd kann in monomerer Form angewendet werden. Vorzugsweise verwendet man Paraformaldehyd oder Trioxan.

Die Umsetzung erfolgt im allgemeinen bei Temperaturen von 0 bis 130°C, vorzugsweise bei Temperaturen von 0 bis 10°C. Die Reaktionsdauer ist von der Zahl der in II einzuführenden Acylamidomethylengruppen, dem Farbstoff II, dem sauren Mittel und der Reaktionstemperatur abhängig. Die Reaktionsdauer liegt im allgemeinen zwischen 1 und 50 Stunden.

Als saure Mittel, die gleichzeitig auch als Reaktionsmedium dienen können, kommen für das Verfahren z.B. 80 bis 100 gew.-%ige Schwefelsäure oder Phosphorsäure, gegebenenfalls zusammen mit wasserabspaltenden Mitteln wie Schwefeltrioxid (Oleum), Phosphorpentoxid, Meta- oder Polyphosphorsäure, Essigsäureanhydrid, Benzol- oder Toluolsulfonsäure in Betracht. Als saures Mittel, das gleichzeitig auch als Reaktionsmedium dient, ist 96 bis 100 gew.-%ige Schwefelsäure und bis zu 12 gew.-%iges Oleum bevorzugt.

Die Menge an dem Reaktionsmedium ist nicht kritisch wenn das Reaktionsgemisch durchmischbar ist und bleibt. Im allgemeinen wendet man, bezogen auf II, die 5 bis 20-fache Gewichtsmenge an dem sauren Mittel an.

Gewünschtenfalls können bei der Umsetzung in Schwefelsäure oder Oleum während oder nach der Beendigung der Umsetzung mit III oder IIIa durch Erhöhen der Schwefelsäurekonzentration und/oder durch Erhöhen der Temperatur eine oder mehrere Sulfonsäuregruppen in die Verfahrensprodukte eingeführt werden. Farbstoffe für das Färben von Papier sollten, um gute Ausblutechtheiten zu behalten, in der Regel nicht mehr als im Mittel 0 bis 0,5 Sulfonsäuregruppen je Molekül enthalten.

Zur Isolierung der Verfahrensprodukte der Formel I mit n = 0 wird das Reaktionsgemisch auf Wasser oder Eis/Wasser ausgetragen und die erhaltene saure Lösung oder Suspension

neutral bis alkalisch bis etwa pH 11 gestellt und die Fällung abgetrennt, z.B. durch Filtrieren. Das Filtergut wird gegebenenfalls gewaschen und getrocknet oder in Form des wasserfeuchten Filtergutes weiterverarbeitet.

Für den Fall, daß die Verfahrensprodukte Sulfonsäuregruppen enthalten, liegen diese in der Regel in Form der Kalium-, Natrium- oder Ammoniumsalze vor.

Nach dem Verfahren werden die Farbstoffe I erhalten, ohne daß bei der Synthese Dichlordimethyläther entsteht.

Verbindungen der Formel I, die quartäre Gruppen enthalten, d.h. n ist 1 bis 4, werden aus den Farbstoffen I mit n = 0 durch Alkylierung in an sich bekannter Weise, z.B. durch Umsetzen mit den entsprechenden Schwefelsäurediestern wie Dimethylsulfat, Diäthylsulfat, den entsprechenden Sulfonsäureestern wie Toluolsulfonsäure-$C_1$- bis $C_4$-alkylestern, Benzolsulfonsäure-$C_1$- bis $C_4$-alkylestern, Chlor-2-, -$C_2$- oder -$C_3$-alkanolen wie 2-Chlorethanol, 2- oder 3-Chlorpropanol, Ethylenoxid, Epichlorhydrin oder Benzylchlorid erhalten.

Als Alkylierungsmittel sind die Methyl- und Ethylester der Schwefelsäure, der Benzol- und Toluolsulfonsäure, vor allem 2-Chlorethanol, Ethylenoxid, Epichlorhydrin und Benzylchlorid bevorzugt.

Die Erfindung betrifft außerdem neue kationische Phthalocyaninfarbstoffe.

Die neuen Farbstoffe haben die allgemeine Formel

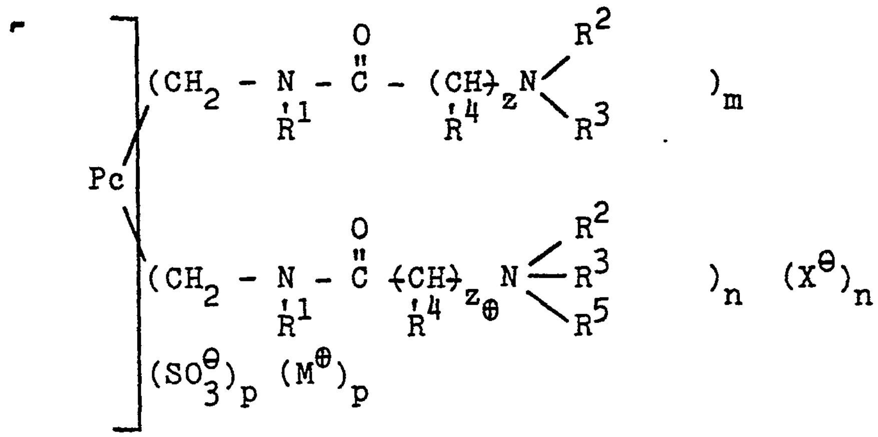

(V),

in der

Pc einen (n + m + p)-wertigen Rest eines Phthalocyanins,

$R^1$ Wasserstoff oder $C_1$- bis $C_4$-Alkyl,

$R^2$ und $R^3$ unabhängig voneinander $C_1$- bis $C_{14}$-Alkyl, $C_2$- bis $C_4$-Hydroxyalkyl, $C_5$- bis $C_8$-Cycloalkyl, Benzyl, Phenyl, Tolyl, oder $-N\genfrac{}{}{0pt}{}{R^2}{R^3}$ einen Pyrrolidin-, Imidazol, 2-Ethyl-4-methylimidazol-, Morpholin-, Piperazin-, N'-$C_1$- bis $C_4$-Alkylpiperazinrest oder

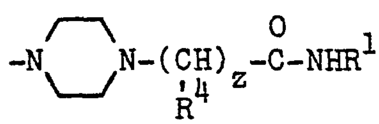,

$R^4$ Wasserstoff oder Methyl,

$R^5$ $C_1$- bis $C_{12}$-Alkyl, $C_2$- bis $C_4$-Hydroxyalkyl, das gegebenenfalls durch Chlor substituiert ist, oder Benzyl,

$X^\ominus$ ein Äquivalent eines Anions oder $HO^\ominus$

$M^\oplus$ ein Äquivalent eines Kations,

z 1 oder 2,

p 0 oder 1,

m 0 oder 1 und

n 1, 2, 3 oder 4 bedeuten, wobei $1 \leqslant (m + n) \leqslant 4$ ist.

Die Farbstoffe (V) sind in Wasser gut bis leicht löslich. Trotz der hohen Löslichkeit sind die Farbstoffe auf Papier sehr stark substantiv. Die hohe Substantivität bewirkt,

daß das mit den Farbstoffen der Formel V gefärbte oder bedruckte Papier ausgezeichnete Ausblutechtheiten aufweist. D.h. das mit den Farbstoffen (V) gefärbte Papier blutet weißes Begleitmaterial in Gegenwart von verdünnten Säuren, wie Milch- oder Essigsäure, verdünnten wäßrigen Alkalien oder Seifenlösungen, verdünnten Alkoholen, Öl oder Milch nicht an (Test nach DIN 53 991).

Bevorzugt sind Farbstoffe V, in denen m = 0 und p im Mittel 0 bis 0,5, insbesondere 0 sind.

Aufgrund der hohen Substantivität der Farbstoffe (V) erhält man bei der Massefärbung von Papier ein farbloses Abwasser.

Die gute Löslichkeit der Farbstoffe (V) ermöglicht Flüssigeinstellungen, die in der Papierindustrie in steigendem Maße bevorzugt werden, da solche Einstellungen ein staubfreies Arbeiten und eine einfache reproduzierbare Dosierung der Farbstoffe für die Färbung erlauben.

Die Farbstoffe (V) haben außerdem den Vorteil, daß das mit diesen Farbstoffen gefärbte Papier bleichbar ist. Diese Eigenschaft war bei den hochsubstantiven Farbstoffen gemäß der Erfindung mit einem sehr hohen sonstigen Echtheitsniveau bei den Naßechtheiten nicht vorherzusehen. Die Bleichbarkeit des mit (V) gefärbten Papiers bringt bei der Wiederverwendung von Abfallpapier und Altpapier große Vorteile, da bei der Aufarbeitung eine praktisch ungefärbte Papiermasse erhalten werden kann.

$R^1$, $R^4$, $R^5$, $X^\ominus$, $M^\oplus$ haben die oben angegebenen Bedeutungen; entsprechendes gilt für $R^2$ und $R^3$ im Rahmen $C_1$- bis $C_{14}$-Alkyl, $C_2$- bis $C_4$-Hydroxyalkyl, $C_5$- bis $C_8$-Cycloalkyl und die Gruppe $-N{<}^{R^2}_{R^3}$.

Bevorzugt sind Farbstoffe der Formel VI

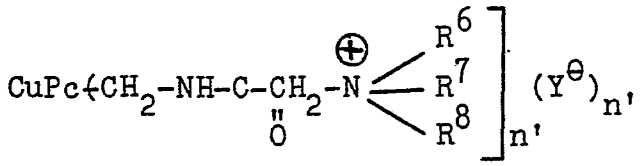 (VI),

in der

n' für 1, 2 oder 3,

$R^6$ und $R^7$ für $C_1$- bis $C_5$-Alkyl oder $-N{<}^{R^6}_{R^7}$ für Morpholinyl oder Pyrrolidinyl und $Y^{\ominus}$ für $HO^{\ominus}$, Benzolsulfonat, Toluolsulfonat, $Cl^{\ominus}$, Methosulfat, Acetat, Lactat oder Methoxyacetat stehen.

Besonders bevorzugt sind Farbstoffe VI, in denen $R^6$ und $R^7$ für n-Propyl, n-Butyl oder $-N{<}^{R^6}_{R^7}$ für Pyrrolidinyl, $R^8$ für 2-Hydroxyethyl, 2-Hydroxy-3-chlorpropyl oder Benzyl und $Y^{\ominus}$ für $OH^{\ominus}$, Acetat, Methoxyacetat oder Lactat stehen.

Die Erfindung soll durch die folgenden Ausführungsbeispiele weiter erläutert werden. Die im folgenden angegebenen Teile und Prozentangaben beziehen sich auf das Gewicht. Die Absorptionsmaxima ($\lambda$max) der Farbstoffe wurden in Lösungen bestimmt, die - wenn nichts anderes angegeben ist - 0,02 g Farbstoff in 5 gew.%iger Essigsäure enthielten.

Beispiel 1

In 700 Teile 3 %igem Oleum werden bei 10 bis 30°C 86,1 Teile Kupferphthalocyanin gelöst und in Portionen nebeneinander 77,8 Teile 1-N-Morpholinylacetamid und 20 Teile Paraformaldehyd eingetragen. Das Gemisch wird eine Stunde bei 20 bis 30°C, und in einer Stunde von 30° auf 100°C aufgeheizt und 15 Stunden bei 100 bis 103°C gerührt. Das Reaktionsgemisch wird auf 25°C gekühlt, auf Eiswasser

ausgetragen und die Lösung mit verdünnter Natronlauge auf pH 11 gestellt. Die Fällung wird abgesaugt, mit Wasser neutral und salzfrei gewaschen und bei 100°C getrocknet. Ausbeute: 101,7 Teile des Farbstoffs der Formel

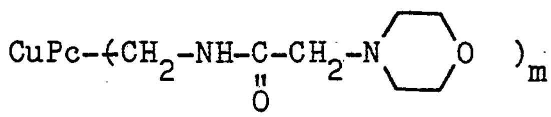 $\bar{m} = 1,4$

Analyse

| | | | | |
|---|---|---|---|---|
| für m = 1 | $C_{39}H_{28}N_{10}O_2$ Cu (732,5) | ber | N 19,11 | Cu 8,66 |
| für m = 2 | $C_{46}H_{40}N_{12}O_4$ Cu (888,5) | ber | N 18,9 | Cu 7,14 |
| | | gef | N 17,9 | Cu 7,4 |
| | | Atomverhältnis | N 10,9 : | Cu 1,0 |

λ max 325 und 605 nm.

Der Farbstoff löst sich in verdünnter Essigsäure mit blauer Farbe. Papier wird in gleichem Farbton gefärbt. Das Abwasser ist farblos. Die gefärbten Papiere sind im Test nach DIN 53 991 absolut ausblutecht. Die Papiere sind sehr gut bleichbar.

Beispiel 2

Verfährt man entsprechend den Angaben in Beispiel 1, verwendet jedoch anstelle von 1 N-Morpholinylacetamid 76,8 Teile 1 N-Pyrolidinylacetamid. Man erhält 99 Teile des Farbstoffs der Formel

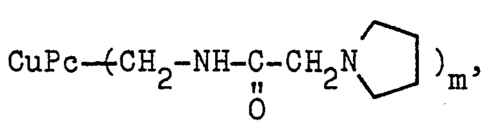, $\bar{m} = 1,3$

der in seinen Eigenschaften dem Farbstoff des Beispiels 1 entspricht.
λ max 323 und 603 nm.

Beispiel 3

In eine homogene Schmelze von 136 Teilen Phosphorpentoxid und 112 Teilen 85 %iger Phosphorsäure werden bei 50 bis 60° 18,6 Teile 1 N-Dibutylamino-acetamid und 4,2 Teile Paraformaldehyd eingetragen und eine Stunde bei 50 bis 60°C gerührt. Bei dieser Temperatur werden 12,9 Teile metallfreies Phthalocyanin eingetragen. Das Gemisch wird in 1 h auf 120°C erhitzt und 7 Stunden bei 120 bis 123°C gerührt. Nach dem Abkühlen auf 70°C wird das Gemisch in warmes Wasser ausgetragen, mit Natronlauge neutralisiert, die Fällung abgesaugt, gewaschen und getrocknet. Ausbeute: 8,7 Teile des Farbstoffs der Formel

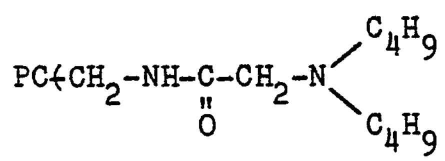

$\lambda$ max 324 und 630 nm.

Der Farbstoff löst sich in verdünnter Essigsäure mit grünstichig blauer Farbe, färbt Papiere im gleichen Farbton. Das Abwasser ist farblos.

Beispiel 4

Verfährt man entsprechend den Angaben im Beispiel 3, verwendet jedoch 14,2 Teile Eisenphthalocyanin und rührt die Mischung 5 Stunden bei 100 bis 105°C, so erhält man 16,6 Teile Farbstoff der Formel

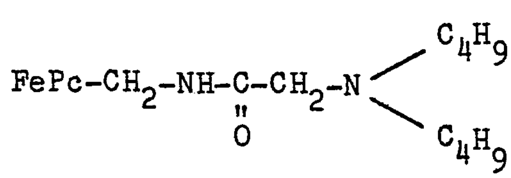

Der Farbstoff löst sich mit grünstichig blauer Farbe in verdünnter Essigsäure und zieht aus dieser Lösung vollständig auf Papierstoff auf.

Beispiel 5

In 625 Teile 0,5 %iges Oleum werden nebeneinander bei 10 bis 30°C 93 Teile 1 N-Dibutylamino-acetamid und 25 Teile Paraformaldehyd innerhalb von 30 Minuten eingetragen und das Gemisch 30 Minuten bei 30°C gerührt. Bei dieser Temperatur werden 72 Teile Kupferphthalocyanin eingetragen. Das Reaktionsgemisch wird eine Stunde bei 30° und 9 Stunden bei 103°C gerührt. Nach dem Abkühlen auf 20 bis 25°C wird auf Eiswasser ausgetragen, die Lösung mit verdünnter Natronlauge neutralisiert, die Fällungabgesaugt, mit Wasser neutral und salzfrei gewaschen und bei 100°C getrocknet.
Ausbeute: 101,5 Teile des Farbstoffs der Formel

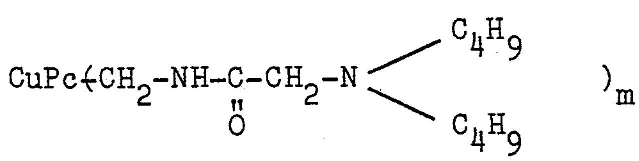

$\bar{m} \approx 1,4$

Analyse: $O_{54}H_{60}N_{12}O_2Cu$ (971,5) für
m = 2 ber N 17,29 Cu 6,54
gef N 17,1 Cu 7,1
$\lambda$ max 325 und 612 nm

Das coloristische Verhalten entspricht dem nach Beispiel 1 erhaltenen Farbstoff.

Beispiele 6 bis 8

Man arbeitet wie in Beispiel 5, verwendet jedoch anstelle von 1-N-Dibutylamino-acetamid die in der Tabelle durch R charakterisierten Acetamide. Man erhält die entsprechenden Kupfer phthalocyaninverbindungen, die im Mittel 1 bis 2 1-N,N-Dialkylamino-acetamido-methylengruppen enthalten.

$$[CuPc]\left(CH_2\text{-}NH\text{-}CO\text{-}CH_2\text{-}N\begin{matrix}R\\R\end{matrix}\right)_m$$

| Beispiel | R | $\bar{m}$ | max [nm] |
|---|---|---|---|
| 6 | $-CH_3$ | 1,3 | 325 und 607 |
| 7 | $-C_2H_5$ | 1,5 | 324 und 605 |
| 8 | $-C_3H_7$ (n) | 2 | 323 und 608 |

Die Farbstoffe lösen sich in verdünnter Essigsäure, Milchsäure oder Methoxyessigsäure zu blauen Lösungen. Die Farbstoffe weisen aus diesen Lösungen ein sehr gutes Ausziehvermögen auf. Das gefärbte Papier weist im Test nach DIN 53 991 eine sehr gute Naßechtheit und sehr gute Lichtechtheit auf. Das gefärbte Papier ist praktisch farblos bleichbar.

Beispiel 9

In 150 Teile 6 %iges Oleum werden bei 20°C 15,5 Teile 1 N-Cyclohexylamino-acetamid und 3,6 Teile Paraformaldehyd in Portionen eingetragen und 30 Minuten bei 40°C gerührt. Darauf werden 14,4 Teile Kupferphthaloxyanin eingetragen. Das Gemisch wird auf 100°C erwärmt und 4 Stunden bei

dieser Temperatur gerührt. Die Isolierung des Farbstoffs erfolgt, wie in Beispiel 1.
Ausbeute: 20,6 Teile Farbstoff der Formel

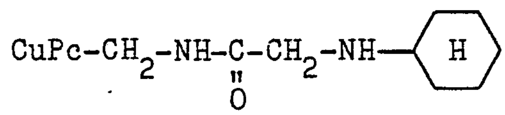

λ max 324 und 608 nm.

Die essigsaure Lösung des Farbstoffs färbt Papier in brillant blauen Farbton. Das Abwasser ist farblos.

Beispiel 10

18,3 Teile des Farbstoffs der Formel

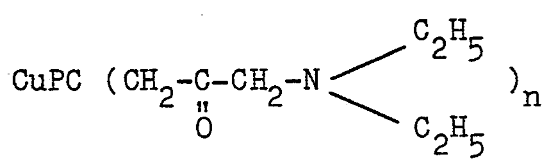

$\bar{n}$ 1,5

werden in 80 Teile Ethylenchlorhydrin eingetragen und das Gemisch 4 Stunden bei 110 bis 145°C gerührt. Der Farbstoff wird durch Zugeben von Aceton gefällt, abgesaugt und bei 50°C getrocknet.
Ausbeute: 19,2 Teile Farbstoff der Formel

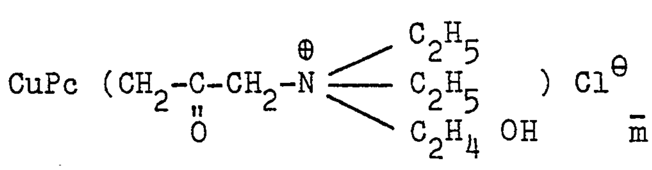

$\bar{m}$ 1,5

λ max 324 und 605 nm.

Der Farbstoff färbt Papier aus wäßrigen Lösungen blau. Das Abwasser ist farblos.

Beispiele 11 bis 15

Es wurde wie in Beispiel 10 gearbeitet, jedoch wurden als Ausgangsstoffe die nach den Beispielen 1, 2, 5, 6 und 8 erhaltenen CuPc-Verbindungen verwendet.

Die Reaktionszeit bei 110°C betrug 6 h. Es wurden Farbstoffe der Formel

$$CuPc\ \left[CH_2-NH-CO-CH_2-\overset{\oplus}{N}\begin{matrix} R' \\ R'' \\ R''' \end{matrix}\right]_{\bar{n}}\ (Y^{\ominus})_{\bar{n}}$$

isoliert. R', R", R"', Y und $\bar{n}$ sind in der folgenden Tabelle angegeben.

| Beispiel | R' | R" | R"' | $Y^{\ominus}$ | $\bar{n}$ | λ max [nm] |
|---|---|---|---|---|---|---|
| 11 | $-CH_3$ | $-CH_3$ | $-CH_2-CH_2OH$ | $Cl^{\ominus}$ | 1,3 | 325; 610,5 |
| 12 | $-C_3H_7$ | $-C_3H_7$ | " | " | 2 | |
| 13 | $-C_4H_9$ | $-C_4H_9$ | " | " | 1,4 | 325; 610,5 |
| 14 | $-(CH_2)_4-$ | | " | " | 1,3 | 324; 609,5 |
| 15 | $-(CH_2)_2-O-(CH_2)_2-$ | | " | " | 1,4 | 325; 611,0 |

Die Farbstoffe färben Papier in der Masse in echten brillanten Blautönen.

Beispiel 16

10,74 Teile der nach Beispiel 2 erhaltenen CuPc-Verbindung wurden in 161 Teile 30 %iger Essigsäure bei 45°C gelöst. Dazu wurden 5 Teile Dimethylsulfat in Portionen zugegeben und das Reaktionsgemisch 3 h bei 50°C gerührt. Dann war eine mit Aceton gefällte und isolierte Probe in Wasser

vollständig löslich. Der Farbstoff wurde mit Aceton gefällt, die Fällung abgesaugt, mit wenig Aceton gewaschen und bei 50°C getrocknet.

Ausbeute: 11,3 Teile Farbstoff der Formel

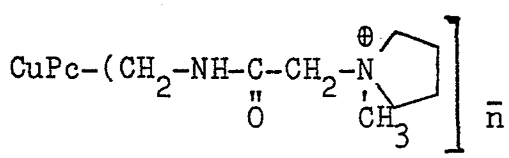 $(CH_3OSO_3^{\ominus})_{\bar{n}}$

$\bar{n} = 1,3$

$\lambda_{max} = 325$ und 611,5 nm.

Beispiel 17

12 Teile des nach Beispiel 6 hergestellten Farbstoffs wurden in 181 Teilen 30 %iger Essigsäure bei 45°C gelöst und bei dieser Temperatur 5 Teile Dimethylsulfat zugefügt. Nach 3 h bei dieser Temperatur war der Farbstoff in Wasser klar löslich. Die Mischung wurde auf 80°C erwärmt und nach dem Abkühlen der Farbstoff mit Aceton gefällt. Die Fällung wurde abgesaugt, mit Aceton gewaschen und bei 60°C getrocknet.

Ausbeute: 11,3 Teile Farbstoff der Formel

$$CuPc-(CH_2-\underset{H}{N}-\underset{O}{\overset{\|}{C}}-CH_2-\overset{\oplus}{N}(CH_3)_3 \quad H_3COSO_3^{\ominus})_{\bar{n}}$$

$\bar{n} = 1,3$

$\lambda_{max}$ 325 und 615 nm.

Beispiel 18

10,9 Teile der nach Beispiel 1 erhaltenen CuPc-Verbindung wurden wie in Beispiel 16 angegeben quaterniert und isoliert.
Ausbeute: 13 Teile Farbstoff der Formel

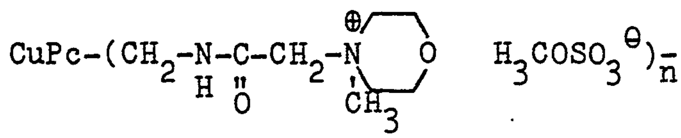

$\bar{n}$ = 1,4
$\lambda_{max}$ 325; 612,5 nm.

Der Farbstoff färbt Papier aus wäßriger Lösung, wobei ein farbloses Abwasser erhalten wird. Die Färbungen sind sehr gut lichtecht.

Beispiel 19

14,3 Teile der nach Beispiel 2 erhaltenen CuPc-Verbindung wurden in 150 Teilen 30 %iger Essigsäure gelöst. Nach dem Zugeben von 1 Teil des Umsetzungsproduktes von Nonylphenol mit 14 Mol Ethylenoxid wurden bei 60°C 6,4 Teile Benzylchlorid zugegeben und das Gemisch bei 75°C gerührt. Nach 3 h bei 75°C wurde der Farbstoff mit 250 Teilen einer Mischung aus Isobutanol und Methanol (4 : 1 Teile) gefällt und abgesaugt. Das Filtergut wurde mit wenig Aceton gewaschen und dann bei 70°C getrocknet.
Ausbeute: 14,6 Teile Farbstoff der Formel

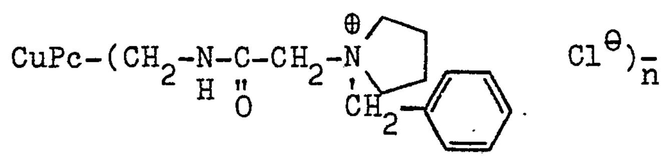

$\bar{n}$ = 1,3
$\lambda_{max}$ 324 und 609,5 nm.

Beispiel 20

19,4 Teile der nach Beispiel 5 erhaltenen CuPc-Verbindung wurden nach den Angaben des Beispiels 19 quaterniert. Das Umsetzungsprodukt wurde mit Aceton gefällt und isoliert. Ausbeute: 17,4 Teile Farbstoff der Formel

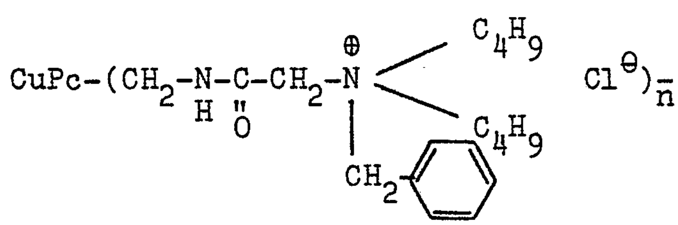

$\bar{n}$ = 1,4
$\lambda_{max}$ 324 und 611 nm.

Mit dem Farbstoff erhält man Papierfärbungen, die sich durch gute Ausblutechtheiten nach DIN 53 991 auszeichnen.

Beispiel 21

35 Teile der nach Beispiel 2 erhaltenen CuPc-Verbindung wurden in 500 Teilen 30 %iger Essigsäure bei 60°C gelöst und in ein Rührdruckgefäß überführt. Nach dem Spülen mit Stickstoff wurde die Lösung auf 80°C erwärmt und dann 30 Teile Ethylenoxid aufgepreßt. Das Gemisch wurde auf 110°C erwärmt und bei 110°C gerührt, bis sich ein konstanter Druck eingestellt hatte. Dann wurde entspannt und das Reaktionsgemisch unter Stickstoff auf 50°C abgekühlt. Das Gemisch wurde mit Ammoniakwasser bis zur vollständigen Fällung versetzt. Die Fällung wurde abfiltriert, mit 2 %igem Ammoniakwasser gewaschen und bei 60°C getrocknet. Ausbeute: 32,5 Teile Farbstoff der Formel

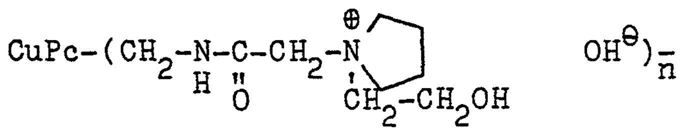

$\bar{n} = 1,3$

$\lambda_{max}$ 325 und 614 nm.

Beispiel 22

a) Es wurde wie in Beispiel 21 gearbeitet, jedoch wurden 80 Teile der nach Beispiel 5 erhaltenen CuPc-Verbindung in 800 Teilen 30 %iger Essigsäure mit Ethylenoxid umgesetzt.
Ausbeute: 72 Teile Farbstoff der Formel

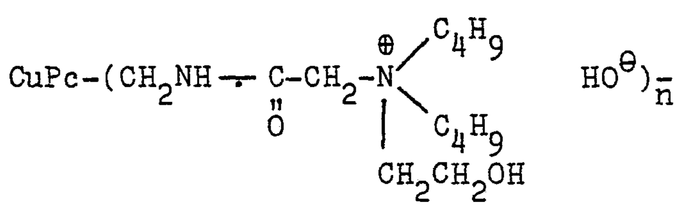

$\bar{n} = 1,4$

$\lambda_{max}$ 325 und 613,5 nm.

Der Farbstoff ist in Form des Salzes mit Methoxyessigsäure in Wasser, Wasser-Isopropanol und Wasser-Isobutanol gut löslich.

b) Ein Farbstoff mit praktisch den gleichen Eigenschaften wurde durch Umsetzen der nach Beispiel 8 erhaltenen CuPc-Verbindung erhalten:

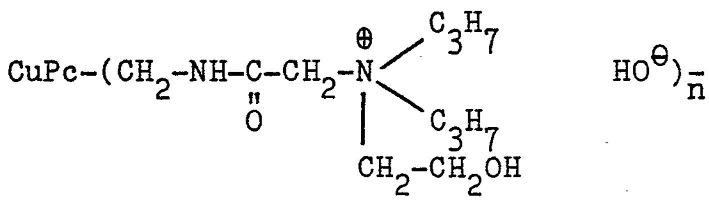

$\bar{n} = 2$

Beispiel 23

24,3 Teile der nach Beispiel 5 erhaltenen CuPc-Verbindung wurden in 250 Teilen 30 %iger Essigsäure bei 80°C gelöst. Bei dieser Temperatur wurden 15 Teile Epichlorhydrin eingetragen und das Reaktionsgemisch 6 h bei 80°C gerührt. Dann war eine mit Aceton gefällte und isolierte Probe vollständig in Wasser löslich. Der Farbstoff wurde mit Aceton gefällt, abgesaugt und mit wenig Aceton mehrmals gewaschen.

Ausbeute: 22 Teile Farbstoff der Formel

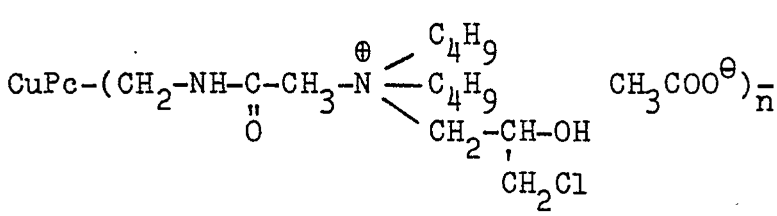

$\bar{n} = 1,4$

Färben von Papier in der Masse;

Beispiel 1

25 kg Katalogpapier (Ausschuß), 60 kg gebleichter Holzschliff (65° Schopper Riegler) und 15 kg ungebleichter Sulfitzellstoff wurden im Pulper in 2500 l Wasser aufgeschlagen. Der 4 %igen wäßrigen Stoffsuspension wurden 0,4 % lösliche Stärke, 16 % Kaolin und 2 % Talkum (berechnet auf trockene Faser) zugegeben. Anschließend wurde die Stoffsuspension am Refiner auf 45° Schopper Riegler ausgemahlen. Der Stoffsuspension wurden 12 kg einer 10 %igen, essigsauren Lösung des Farbstoffs aus Beispiel 1 zugesetzt, (= 1 % trockener Farbstoff, bezogen atro Faser). Nach 15 Minuten Ziehzeit wurde dem Stoff Harzleim-Dispersion (Menge: 0,6 % trocken, bezogen auf Faser) zugesetzt. Nach 10 Minuten wurde der aus der Mischbütte abfließende Stoff kontinuierlich Wasser auf 0,8 % Stoffgehalt verdünnt und kontinuierlich mit Alaun ($Al_2(SO_4)_3 \cdot 18\ H_2O$) auf pH 4,5 gestellt (gemessen im Siebwasser) und in den Stoffauflauf gepumpt.

Es wurde ein brillantblaues Katalogpapier (60 $g/m^2$) erhalten, das nach DIN 53 991 gute Ausblutechtheiten aufweist.

Das Papier kann durch Behandeln mit Natriumhypochlorit praktisch vollständig entfärbt werden.

Werden anstelle des Farbstoffs aus Beispiel 1 die Farbstoffe der Beispiele 1, 2 oder 3 verwendet, dann erhält man brillant blau gefärbtes Papier mit guten Naßechtheiten.

Färben von Papier in der Masse

Beispiel 2

50 g einer Mischung aus gebleichtem Kiefersulfatzellstoff und gebleichtem Birkensulfatzellstoff (70 : 30 Teile) wurden in 1 l Wasser ($10^o$ dH) bei Raumtemperatur zu einer Fasersuspension aufgeschlagen und anschließend die Suspension mit 1 l des gleichen Wassers verdünnt. Der Suspension wurde eine Mischung aus 2 g einer 10 %igen essigsauren Lösung des nach Beispiel 21 erhaltenen Farbstoffs und 10 g Wasser zugegeben. Die Fasersuspension wurde 15 Minuten gerührt und dann mit Wasser auf 0,5 % Feststoffgehalt verdünnt. Mit der erhaltenen Suspension wurden auf dem Labor-Blattbildner der Fa. Franck Papierblätter mit einem Flächengewicht von 80 $g/m^2$ hergestellt. Die feuchten Blätter wurden 5 Minuten bei $100^oC$ getrocknet. Es wurde rotstichig blau gefärbtes Schrenzpapier erhalten. Das gefärbte Papier weist sehr gute Ausblutechtheiten nach DIN 53 991 auf.

Das bei der Blattbildung anfallende Abwasser ist farblos.

Das gefärbte Papier kann durch Behandeln mit Natriumhypochloritlösung (2 % aktives Chlor, bezogen auf Papier) vollständig entfärbt werden.

In der Lichtechtheit und in der Ausblutechtheit in verdünnter Essigsäure ist das erhaltene gefärbte Papier dem mit dem Farbstoff der DE-PS 10 29 965, Beispiel 1a in gleicher Weise gefärbten Papier überlegen. Außerdem weist das nach dem erfindungsgemäßen Verfahren erhaltene Papier einen reineren Farbton auf.

Ähnlich gute Ergebnisse werden erhalten, wenn man die Farbstoffe der Beispiele 2, 16, 11 oder 22 a) verwendet.

Massefärben von Papier

Beispiel 3

15 kg Altpapier (holzhaltig), 25 kg gebleichter Holzschliff und 10 kg ungebleichter Sulfatzellstoff wurden im Pulper zu einer 3 %igen wäßrigen Stoffsuspension aufgeschlagen. Die Stoffsuspension wurde in einer Färbebütte auf 2 % verdünnt. Dieser Suspension wurden dann - gerechnet auf trockene Gesamtfaser - nacheinander unter Rühren 0,5 % lösliche, oxidativ aufgebaute Maisstärke, 5 % Kaolin und 1,25 kg einer 5 %igen essigsauren Lösung des Farbstoffs aus Beispiel 2 zugegeben. Nach 20 Minuten wurde der Stoff in der Mischbütte mit 1 % (bezogen auf atro Faser) einer Harzleim-Dispersion versetzt. Die homogene Stoffsuspension wurde auf der Papiermaschine kurz vor dem Stoffauflauf, mit Alaun auf pH 5 eingestellt.

Auf der Papiermaschine wurde ein 80 $g/m^2$ schweres blaues Tütenpapier maschinenglatt hergestellt. Das gefärbte Papier weist sehr gute Ausblutechtheiten nach DIN 53 991 und gute Lichtechtheit auf.

Das Papier kann mit Hypochlorit praktisch vollständig entfärbt werden.

Verwendet man anstelle des oben angegebenen Farbstoffs die entsprechende Menge des nach Beispiel 17 erhaltenen, dann erhält man ebenfalls blaues Papier, das sehr gute Echtheiten aufweist.

Massefärben von Papier

Beispiel 4

a) 25 kg Katalogpapier (Ausschuß), 60 kg gebleichter Holzschliff (65° Schopper Riegler) und 15 kg ungebleichter Sulfitzellstoff wurden im Pulper in 2500 l Wasser aufgeschlagen. Der 4 %igen wäßrigen Stoffsuspension wurden 0,4 % lösliche Stärke, 16 % Kaolin und 2 % Talkum (berechnet auf trockene Faser) zugegeben. Anschließend wurde die Stoffsuspension am Refiner auf 45° Schopper Riegler ausgemahlen. Der Stoffsuspension wurden 12 kg einer 10 %igen, essigsauren Lösung des Farbstoffs aus Beispiel 22 b) zugesetzt, (= 1 % trockener Rotfarbstoff bezogen atro Faser). Nach 15 Minuten Ziehzeit wurde der Suspension Harzleim-Dispersion (Menge: 0,6 % trocken, bezogen auf Faser) zugesetzt. Nach 10 Minuten wurde der aus der Mischbütte abfließende Stoff kontinuierlich mit Wasser auf 0,8 % Stoffgehalt verdünnt und kontinuierlich mit Alaun ($Al_2(SO_4)_3 \cdot 18\ H_2O$) auf pH 4,5 gestellt (gemessen im Siebwasser) und in den Stoffauflauf gepumpt. Es wurde blaues Katalogpapier (60 g/m$^2$), erhalten, das nach DIN 53 991 sehr gute Ausblutechtheiten und gute Lichtechtheit aufweist.

b) Es wurde wie unter a) angegeben verfahren, jedoch die entsprechende Menge des Farbstoffs aus Beispiel 21 in Form der essigsauren Lösung verwendet.

Es wurde ebenfalls ein blaues Papier mit sehr guten Ausblutechtheiten und sehr guter Lichtechtheit erhalten.

Druckfarbe/Bedrucken von Papier

a) 5 Teile Farbstoff aus Beispiel 22 a) wurden in eine Mischung aus 47 Teilen Wasser, 47 Teilen Isopropanol und 1 Teil Methoxyessigsäure eingetragen und gelöst.

b) Mit der nach a) erhaltenen Druckfarbe wurde Papier auf einer Flexodruckmaschine bedruckt.

Es wurden brillante blaue Drucke erhalten, die hervorragende Echtheiten, wie sehr gute Wasserechtheit (DIN 16 524), Alkali-, Säure- und Ölechtheit aufweisen.

Es war überraschend, daß der Farbstoff, der in Wasser, Wasser-Isopropanol und in Wasser-Isobutanol in Form des Methoxyacetats gut löslich ist auf Papier Färbungen mit hervorragender Wasserechtheit (Naßechtheit) liefert.

## Patentansprüche

1. Verfahren zum Färben oder Bedrucken von Papier mit kationischen Farbstoffen, dadurch gekennzeichnet, daß man kationische Phthalocyaninfarbstoffe der Formel

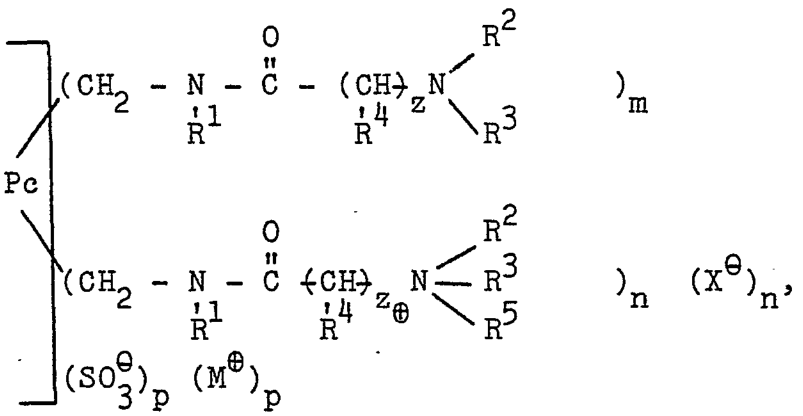

verwendet, in der

Pc einen (n + m + p)-wertigen Rest eines Phthalocyanins,

$R^1$ Wasserstoff oder $C_1$- bis $C_4$-Alkyl,

$R^2$ und $R^3$ unabhängig voneinander $C_1$- bis $C_{14}$-Alkyl, $C_2$- bis $C_4$-Hydroxyalkyl, $C_5$- bis $C_8$-Cycloalkyl, -Aminocyclopentyl-methyl, Benzyl, Phenyl, Tolyl, N,N-Di-$C_1$- bis $C_5$-alkylamino- $C_2$- bis $C_4$-alkyl, N-$C_5$- bis $C_8$-Cycloalkylamino-$C_2$- bis $C_4$-alkyl, N-$C_1$- oder $C_2$-Alkyl-N-$C_5$- bis $C_8$-cycloalkyl--amino-$C_2$- bis $C_4$-alkyl, wobei - wenn n = 0 ist - $R^2$ auch Wasserstoff sein kann, oder $-N<^{R^2}_{R^3}$ einen Pyrrolidin-, Imidazol, 2-Ethyl-4--methylimidazol-, Morpholin-, Piperazin-, N'-$C_1$- bis $C_4$-Alkylpiperazinrest oder

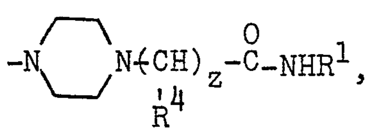

$R^4$ Wasserstoff oder Methyl,
$R^5$ $C_1$- bis $C_{12}$-Alkyl, $C_2$- bis $C_4$-Hydroxyalkyl, das gegebenenfalls durch Chlor substituiert ist, oder Benzyl,
$X^{\ominus}$ ein Äquivalent eines Anions,
$M^{\oplus}$ ein Äquivalent eines Kations,
z 1 oder 2,
p 0 oder 1,
m 0, 1, 2, 3 oder 4 und
n 0, 1, 2, 3 oder 4 bedeuten, wobei $1 \leqslant (m + n) \leqslant 4$ ist.

2. Verfahren gemäß Anspruch 1, dadurch gekennzeichnet, daß in der Formel Pc für einen (m + n + p)-wertigen Rest des Kupferphthalocyanins steht.

3. Verfahren gemäß Anspruch 1 oder 2, dadurch gekennzeichnet, daß in der Formel $R^1$ und $R^4$ Wasserstoff bedeuten.

4. Verfahren gemäß den Ansprüchen 1, 2 oder 3, dadurch gekennzeichnet, daß in der Formel p im Mittel 0 bis 0,5, vorzugsweise 0 ist.

5. Verfahren gemäß Anspruch 1, 2, 3 oder 4, dadurch gekennzeichnet, daß n = 0 ist.

7. Verfahren gemäß den Ansprüchen 1 bis 5, dadurch gekennzeichnet, daß in der Formel $-N\genfrac{}{}{0pt}{}{R^2}{R^3}$ für Di-n-propylamino, Di-n-butylamino, Morpholinyl oder Pyrrolidinyl stehen.

8. Verfahren gemäß Anspruch 1, dadurch gekennzeichnet, daß man Farbstoffe der Formel

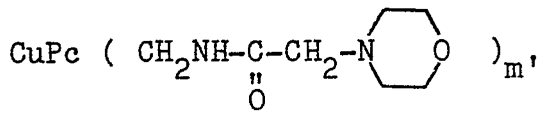 ,

oder

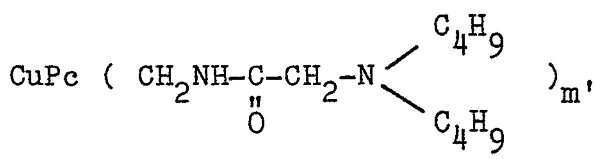 ,

verwendet, wobei in der Formel m' 1 oder 2 ist.

9. Kationische Phthalocyaninfarbstoffe der Formel

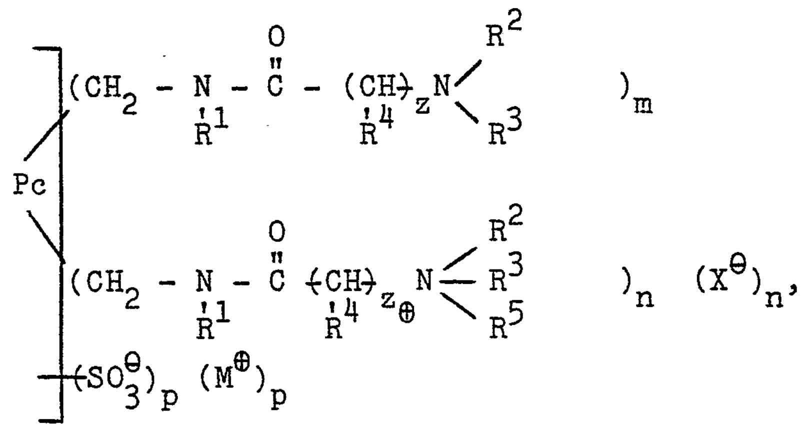

in der

Pc einen (n + m + p)-wertigen Rest eines Phthalocyanins,

$R^1$ Wasserstoff oder $C_1$- bis $C_4$-Alkyl,

$R^2$ und $R^3$ unabhängig voneinander $C_1$- bis $C_{14}$-Alkyl, $C_2$- bis $C_4$-Hydroxyalkyl, $C_5$- bis $C_8$-Cycloalkyl, Benzyl, Phenyl, Tolyl oder $-N<^{R^2}_{R^3}$ einen Pyrrolidin-, Imidazol, 2-Ethyl-4-methylimidazol-, Morpholin-, Piperazin-, $N'$-$C_1$- bis $C_4$-Alkylpiperazinrest oder

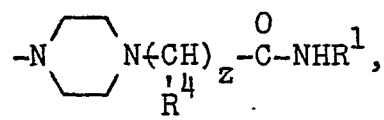

$R^4$ Wasserstoff oder Methyl,

$R^5$ $C_1$- bis $C_{12}$-Alkyl, $C_2$- bis $C_4$-Hydroxyalkyl, das gegebenenfalls durch Chlor substituiert ist, oder Benzyl,

$X^{\ominus}$ ein Äquivalent eines Anions oder $HO^{\ominus}$

$M^{\oplus}$ ein Äquivalent eines Kations,

z 1 oder 2,

p 0 oder 1,

m 0 oder 1 und

n 1, 2, 3 oder 4 bedeuten, wobei $1 \leqslant (m + n) \leqslant 4$ ist.

10. Farbstoffe gemäß Anspruch 9, <u>dadurch gekennzeichnet</u>, daß Pc für einen (m + n + p)-wertigen Rest des Kupferphthalocyanins steht.

11. Farbstoffe gemäß Anspruch 9 oder 10, dadurch gekennzeichnet, daß m = 0 und p = 0 sind.

12. Farbstoffe gemäß den Ansprüchen 9, 10 oder 11, dadurch gekennzeichnet, daß $R^1$ und $R^4$ Wasserstoff bedeuten.

13. Farbstoffe gemäß den Ansprüchen 9 bis 12, dadurch gekennzeichnet, daß $R^2$ und $R^3$ für $C_1$- bis $C_5$-Alkyl oder $-N<^{R^2}_{R^3}$ für Morpholinyl, Piperidinyl oder Pyrrolidinyl, $R^5$ für $C_1$- bis $C_4$-Alkyl, 2-Hydroxyethyl, 2-Hydroxy-3-chlorpropyl oder Benzyl und $X^{\ominus}$ für $Cl^{\ominus}$, $H_3COSO_3^{\ominus}$, Benzolsulfonat, Toluolsulfonat, Acetat, Methoxyacetat, Lactat oder $HO^{\ominus}$ stehen.

14. Farbstoffe gemäß Anspruch 13, <u>gekennzeichnet durch</u> die Formel

$$CuPc\text{-}(CH_2\text{-}NH\text{-}\underset{\underset{O}{\|}}{C}\text{-}CH_2\text{-}\underset{R^8}{\overset{\oplus}{N}}{<}^{R^6}_{R^7}\ )_n,\ (Y^{\ominus})_{n'},$$

in der n' für 1, 2 oder 3, $R^6$ und $R^7$ für $C_1$- bis $C_5$-Alkyl oder $-N{<}^{R^6}_{R^7}$ für Morpholinyl oder Pyrrolidinyl $R^{8'}$ für Methyl, 2-Hydroxyethyl, 2-Hydroxy-3-chlor-propyl oder Benzyl und $Y^{\ominus}$ für $HO^{\ominus}$, Benzolsulfonat, Toluolsulfonat, $Cl^{\ominus}$, Methosulfat, Acetat, Lactat oder Methoxyacetat stehen.

15. Farbstoffe gemäß Anspruch 13, <u>dadurch gekennzeichnet</u>, daß $R^6$ und $R^7$ für n-Propyl oder n-Butyl oder $-N{<}^{R^6}_{R^7}$ für Pyrrolidinyl, $R^8$ für 2-Hydroxyethyl oder Benzyl und Y für $HO^{\ominus}$, Acetat, Methoxyacetat oder Lactat stehen.

16. Gefärbtes oder bedrucktes Papier, erhalten nach dem Verfahren gemäß den Ansprüchen 1 bis 8.

Europäisches Patentamt

**0061623**

Nummer der Anmeldung

# EUROPÄISCHER RECHERCHENBERICHT

EP 82 10 2005

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | FR-A-1 396 903 (SANDOZ)<br>* Seite 1, Spalte 1, Zeile 1 - Seite 2, Spalte 2, Zeile 31; Seite 3, Spalte 2, Zeilen 44-49; Zusammenfassung *<br>--- | 1-3,5, 9-14, 16 | D 21 H 3/80<br>C 09 B 47/32<br>C 09 B 47/24<br>C 09 B 47/16 |
| X | DE-A-1 029 965 (BASF)<br>* Ansprüche; Spalte 1, Zeile 1 - Spalte 2, Zeile 50 *<br>----- | 1-3,9-14,16 | |
| | | | **RECHERCHIERTE SACHGEBIETE (Int. Cl. 3)** |
| | | | C 09 B 47/00<br>D 21 H 3/00 |

Der vorliegende Recherchenbericht wurde für alle Patentansprüche erstellt.

| Recherchenort | Abschlußdatum der Recherche | Prüfer |
|---|---|---|
| DEN HAAG | 07-07-1982 | DELANGHE L.L.M. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82